# NEUE EUROPÄISCHE PATENTSCHRIFT

(11) **EP 0 301 293 B2**
(45) Veröffentlichungstag und Bekanntmachung des Hinweises auf die Entscheidung über den Einspruch: **30.08.1995**
(45) Hinweis auf die Patenterteilung: 27.11.1991
(21) Anmeldenummer: 88110936.7
(22) Anmeldetag: 08.07.1988
(51) Int. Cl.: C09D 5/44

(54) **Kathodisch abscheidbare Kunstharze enthaltende wässrige Elektrotauchlackbäder und Verfahren zur Beschichtung elektrisch leitfähiger Substrate**
Aqueous electrodeposition baths containing cathodically separable synthetic resins and method of coating electrically conductive substrates
Bain aqueux d'électrodéposition contenant des résines synthétiques déposables à la cathode et procédé de revêtement de substrats électroconducteurs

(30) Priorität: 29.07.1987 EP 87110956; 16.11.1987 DE 3738827
(43) Veröffentlichungstag der Anmeldung: 01.02.1989
(73) Patentinhaber: BASF Lacke + Farben AG, 48165 Münster-Hiltrup (DE)
(72) Erfinder: Geist, Michael, Dr., D-6700 Ludwigshafen (DE); Fobbe, Helmut, Dr., D-4400 Münster (DE); Jouck, Walter, Dr., D-4400 Münster (DE); Strauss, Udo, Dr., D-4400 Münster (DE); Arlt, Klaus, Dr., D-4403 Senden (DE); Cibura, Klaus, Dr., Southfield, MI 48034 (US)
(74) Vertreter: Münch, Volker, Dr.

(56) Entgegenhaltungen:
- DE-C- 3 442 727
- FR-A- 2 398 767
- Lehrbuch der Lacke und Beschichtungen, 1970, Band III, Seite 266

## Beschreibung

Die Erfindung betrifft kathodisch abscheidbare Kunstharze enthaltende wäßrige Elektrotauchlackbäder.

Die kationische Elektrotauchlackierung (KTL) ist ein vor allem zum Grundieren häufig angewandtes Lackierverfahren, insbesondere im Bereich der Automobilgrundierungen, bei dem wasserverdünnbare, kationische Gruppen tragende Kunstharze mit Hilfe von Gleichstrom auf elektrisch leitende Körper aufgebracht werden.

Elektrotauchlackbäder des oben beschriebenen Typs sind z.B. in folgenden Patentdokumenten offenbart:
US-PS-3,799,854; US-PS-S,984,299; US-PS-4,031,050;
US-PS-4,252,703; US-PS-4,332,711, DE-PS 31 08 073,
DE-PS-27 01 002, EP 4090, EP 12463, EP 59895,
DE-OS-31 03 642, DE-OS-32 15 891.

Mit Lacksystemen dieser Art können qualitativ hervorragende Lackierungen erzielt werden. Oft treten jedoch im eingebrannten Lackfilm dem Fachmann gut bekannte Oberflächenstörungen (insbesondere Krater) auf. Die Ursachen für diese Obenflachenstörungen können in der Natur der für die Elektrotauchlacke verwendeten Komponenten (sogenannte systemimmanente Ursachen) liegen. In den meisten Fallen sind jedoch in das Elektrotauchlackbad eingeschleppte Verunreinigungen die Ursache für das Auftreten der obengenannten Oberflächenstörungen. Als Beispiele für solche Verunreinigung seien Tiefziehfette, Korrosionsschutzfette, Nahtabdichtungsmaterialien, Schmiertette usw. genannt.

Bei der Abscheidung des Lackmaterials werden diese Verunreinigungen mit in den Film eingebracht. Beim Einbrennen des Lackfilms kann es dann aufgrund von Unverträglichkeiten zwischen dem Lackbindemittel und der Verunreinigung zu den obengenannten Oberflächenstörungen kommen.

Es sind eine Reihe von Versuchen bekannt, das Auftreten von Oberflächenstörungen durch Zugabe von Additiven zu unterdrücken. So können den Elektrotauchlacken z.B. Silikonöle zugesetzt werden. Auf diese Weise können zwar die Oberflächenstörungen beseitigt werden, dafür treten aber in aller Regel auf Haftungsstörungen zurückzuführende Probleme in überlackierten Lackschichten (wie z.B. Füller und Decklack) auf.

Weiter wurde versucht, durch geeignete organische Harze die Kontaminationsresistenz von Elektrotauchlackbädern zu verbessern. In der japanischen Patentanmeldung J 6 1115 974 wird ein Umsetzungsprodukt aus einem mit dimeren Fettsäuren modifizierten Polyepoxydharz mit Polyoxyalkylenpolyamin beschrieben. Dieses Produkt soll die Kraterneigung von KTL-Materialien unterdrücken. In der EP-A 70 550 wird ein Umsetzungsprodukt eines Polyepoxydharzes mit einem Polyoxyalkylenpolyamin mit primären Aminogruppen beschrieben. Auch dieses Material soll die elektrisch abgeschiedenen Lackfilme verbessern durch Eliminierung oder zumindest Minimierung der Kraterneigung. Aber auch diese Produkte führen zu nachhaltigen Zwischenhaftungsproblemen für Füller und Decklacke.

Die der vorliegenden Erfindung zugrundeliegende Aufgabenstellung besteht in der Bereitstellung von neuen wäßrigen Elektrotauchlackbädern gemäß Oberbegriff des Patentanspruchs 1. Insbesondere sollen die oben dargelegten Probleme des Standes der Technik überwunden bzw. vermindert werden.

Diese Aufgabe wird überraschenderweise durch Bereitstellung von kathodisch abscheidbare Kunstharze enthaltenden waßrigen Elektrotauchlackbädern gelöst, die dadurch gekennzeichnet sind, daß sie ein Homo- oder Copolymer eines Alkylvinylethers der allgemeinen Formel CH₂ = CH-O-R enthalten, wobei R für einen Alkylrest mit 2 bis 4 C-Atomen steht.

Die durch die Erfindung erreichten Vorteile sind im wesentlichen darin zu sehen, daß die erfindungsgemäßen Elektrotauchlackbäder Lackfilme liefern, die keine bzw. nur wenige Oberflächenstörungen zeigen, ohne daß bei überlackierten Lackschichten Haftungsprobleme auftreten. Die erfindungsgemäßen Elektrotauchlackbäder zeigen überraschenderweise ausgezeichnete Kontaminationsresistenz, d.h. die guten Oberflächeneigenschaften der eingebrannten Filme bleiben auch dann erhalten, wenn Oberflächenstörungen verursachende Substanzen in die erfindungsgemäßen Elektrotauchlackbäder eingeschleppt werden.

Die erfindungsgemäßen Elektrotauchlackbäder können prinzipiell alle für die Herstellung von Elektrotauchlackbädern geeigneten kathodisch abscheidbaren fremd- oder selbstvernetzenden Kunstharze enthalten.

Bevorzugt sind jedoch die Elektrotauchlackbäder, die kationische, aminmodifizierte Epoxidharze als kathodisch abscheidbare Kunstharze enthalten. Es sind sowohl selbstals auch fremdvernetzende kationische aminmodifizierte Epoxidharze bekannt. Bevorzugt werden fremdvernetzende kationische aminmodifizierte Epoxidharze eingesetzt.

Unter kationischen aminmodifizierten Epoxidharzen werden kationische Reaktionsprodukte aus
(A) ggf. modifizierten Polyepoxiden,
(B) primären und/oder sekundären Aminen bzw. deren Salzen und/oder Salzen von tertiären Aminen und gegebenenfalls
(C) Polyolen, Polycarbonsäuren, Polyaminen oder Polysulfiden verstanden.

Unter Polyepoxiden werden Verbindungen verstanden, die zwei oder mehr Epoxidgruppen im Molekül enthalten.

Zur Herstellung der kationischen aminmodifizierten Epoxidharze sind als Komponente (A) alle Verbindungen geeignet, die zwei oder mehr Epoxidgruppen im Molekül enthalten. Bevorzugt sind solche Verbindungen, die zwei Epoxidgruppen im Molekül enthalten und ein relativ niedriges Molekulargewicht von höchstens 750, bevorzugt 400 bis 500, haben.

Besonders bevorzugte (A)-Komponenten sind Verbindungen, die herstellbar sind durch Umsetzung von
(a) einer Diepoxidverbindung oder eines Gemisches von Diepoxidverbindungen mit einem Epoxidäquivalentgewicht unter 2000 mit
(b) einer unter den gegebenen Reaktionsbedingungen gegenüber Epoxidgruppen monofunktionell reagierenden, eine Phenol- oder Thiolgruppe enthaltenden Verbindung oder eines Gemisches solcher Verbindungen,
wobei die Komponenten (a) und (b) in einem Molverhältnis von 10:1 bis 1:1. bevorzugt 4:1 bis 1,5:1, eingesetzt werden und die Umsetzung der Komponente (a) mit der Komponente (b) bei 100 bis 190 °C gegebenenfalls in Anwesenheit eines Katalysators durchgeführt wird (vgl. DE-OS-35 18 770).

Weitere besonders bevorzugte (A)-Komponenten sind Verbindungen, die herstellbar sind durch eine bei 100 bis 195 °C, gegebenenfalls in Anwesenheit eines Katalysators durchgeführten, durch einen monofunktionell reagierenden Starter, der entweder eine alkoholische OH-Gruppe, eine phenolische OH-Gruppe oder eine SH-Gruppe trägt, initiierten Polyaddition einer Diepoxidverbindung und/oder eines Gemisches von Diepoxidverbindungen, gegebenenfalls zusammen mit mindestens So einer Monoepoxidverbindung, zu einem Epoxidharz, in dem Diepoxidverbindung und Starter in einem Molverhältnis von größer 2:1 bis 10:1 eingebaut sind (vgl. DE-OS-35 18 732).

Polyepoxide, die zur Herstellung der besonders bevorzugten (A)-Komponenten und auch selbst als (A)-Komponenten einsetzbar sind, sind aus Polyphenolen und Epihalohydrinen hergestellte Polyglycidylether von Polyphenolen. Als Polyphenole können z. B. ganz besonders bevorzugt Bisphenol A und Bisphenol F eingesetzt werden. Außerdem sind auch 4,4'-Dihydroxybenzophenon, Bis-(4hydroxyphenyl)-1,1-ethan, Bis-(4-hydroxy-phenyl)-1,1-isobutan, Bis-(4-hydroxy-tertiär-butylphenyl)-2,2-propan, Bis-(2-hydroxynaphthyl)-methan, 1,5-Dihydroxynaphthalin und phenolische Novolakharze geeignet. Weitere geeignete Polyepoxide sind Polyglycidether von mehrwertigen Alkoholen, wie z. B. Ethylenglykol, Diethylenglykol, 1,2-Propylenglykol, 1,4-Propylenglykol, 1,5-Pentandiol, 1,2,6-Hexantriol, Glycerin und Bis-(4-hydroxycyclohexyl-)2,2-propan.

Es können auch Polyglycidylester von Polycarbonsäuren, wie z. B. Oxalsäure, Bernsteinsaure, Glutarsäure, Terephthalsäure, 2,6-Naphthalindicarbonsäure, dimerisierte Linolsäure eingesetzt werden. Typische Beispiele sind Glycidyladipat und Glycidylphthalat.

Ferner sind Hydantoinepoxide, epoxidiertes Polybutadien und Polyepoxidverbindungen geeignet, die man durch Epoxidierung einer olefinisch ungesättigten aliphatischen Verbindung erhält.

Unter modifizierten Polyepoxiden werden Polyepoxide verstanden, in denen ein Teil der reaktionsfähigen Gruppen mit einer modifizierenden Verbindung umgesetzt worden ist.

Als Beispiele für modifizierende Verbindungen werden genannt:
a) Carboxylgruppenhaltige Verbindungen wie gesättigte oder ungesättigte Monocarbonsäuren (z. B. Benzoesäure, Leinölfettsäure, 2-Ethylhexansäure, Versaticsäure), aliphatische, cycloaliphatische und/oder aromatische Dicarbonsäuren verschiedener Kettenlänge (z. B. Adipinsäure, Sebacinsäure, Isophthalsaure oder dimere Fettsäuren), Hydroxialkylcarbonsäuren (z. B. Milchsaure, Dimethylolpropionsäure) sowie carboxylgruppenhaltige Polyester oder
b) aminogruppenhaltige Verbindungen wie Diethylamin oder Ethylhexylamin oder Diamine mit sekundären Aminogruppen, z. B. N,N'-Dialkylalkylendiamine wie Dimethylethylendiamin, N,N'-Dialkyl-polyoxialkylenamine wie N,N'-dimethylpolyoxipropylendiamin, cyanalkylierte Alkylendiamine wie Bis-N,N'cyanethylethylendiamin, cyanalkylierte Polyoxialkylenamine wie Bis-N,N'-Cyanethylpolyoxipropylendiamin, Polyaminoamide wie z. B. Versamide, insbesondere endständige Aminogruppen enthaltende Umsetzungsprodukte aus Diaminen (z. B. Hexymethylendiamin), Polycarbonsäuren. insbesondere Dimerfettsäuren und Monocarbonsäuren, insbesondere Fettsäuren, oder das Umsetzungsprodukt von einem Mol Diaminohexan mit zwei Molen Monoglycidylether oder Monoglycidylester, speziell Glydidylester α-verzweigter Fettsäuren wie der Versaticsäure, oder
c) hydroxylgruppenhaltige Verbindungen wie Neopentylglykol, Bis-ethoxiliertes Neopentylglykol. Hydroxipivalinsäureneopentylglykolester,Dimethylhydantoin-N,N'-diethanol, Hexandiol-1,6, Hexandiol-2,5, 1,4-Bis-(hydroximethyl)-cyclohexan, 1,1-Isopropyliden-bis-(p-phenoxi)-2-propanol, Trimethylolpropan, Pentaerythrit oder Aminoalkohole wie Triethanolamin, Methyldiethanolamin oder hydroxylgruppenhaltige Alkylketimine wie Aminomethylpropandiol-1,3-methyl-isobutylketimin oder Tris-(hydroximethyl)-amino-methan-cyclohexanonketimin sowie auch Polyglykolether, Polyesterpolyole, Polyetherpolyole, Polycaprolactonpolyole, Polycaprolactampolyole verschiedener Funktionalität und Molekulargewichte oder
d) gesättigte oder ungesättigte Fettsäuremethylester, die in Gegenwart von Natriummethylat mit Hydroxylgruppen der Epoxidharze umgeestert werden.

Als Komponente (B) können primäre und/oder sekundäre Amine bzw. deren Salze und/oder Salze von tertiären Aminen verwendet werden, wobei die sekundären Amine besonders bevorzugte Komponenten (B) sind.

Bevorzugt sollte das Amin eine in Wasser lösliche Verbindung sein. Beispiele solcher Amine sind Mono- und Dialkylamine, wie Methylamin, Ethylamin, Propylamin, Butylamin, Dimethylamin, Diethylamin, Dipropylamin, Methylbutylamin u. dgl. Geeignet sind ebenfalls Alkanolamine, wie z.B. Methylethanolamin, Diethanolamin u. dgl. Ferner sind Dialkylaminoalkylamine, wie z.B. Dimethylaminoethylamin, Diethylaminopropylamin, Dimethylaminopropylamin u. dgl. geeignet. In den meisten Fällen werden niedermolekulare Amine verwendet, doch ist es auch möglich, höhermolekulare Monoamine anzuwenden.

Polyamine mit primären und sekundären Aminogruppen können in Form ihrer Ketimine mit den Epoxidgruppen umgesetzt werden. Die Ketimine werden aus den Polyaminen in bekannter Weise hergestellt.

Die Amine können auch noch andere Gruppen enthalten, doch sollen diese die Umsetzung des Amins mit der Epoxidgruppe nicht stören und auch nicht zu einer Gelierung der Reaktionsmischung führen.

Die für die Wasserverdünnbarkeit und elektrische Abscheidung erforderlichen Ladungen können durch Protonisierung mit wasserlöslichen Säuren (z.B. Borsäure, Ameisensäure, Milchsäure, bevorzugt Essigsäure) oder auch durch Umsetzung der Oxirangruppen mit Salzen eines Amins erzeugt werden.

Als Salz eines Amins kann das Salz eines tertiären Amins verwendet werden.

Der Aminanteil des Amin-Säuresalzes ist ein Amin, das unsubstituiert oder substituiert wie im Falle des Hydroxylamins sein kann, wobei diese Substituenten die Umsetzung des Amin-Säuresalzes mit dem Polyepoxid nicht stören sollen und die Reaktionsmischung nicht gelieren soll. Bevorzugte Amine sind tertiäre Amine, wie Dimethylethanolamin, Triethylamin, Trimethylamin, Triisopropylamin u. dgl. Beispiele von anderen geeigneten Aminen sind in der US-PS 38 39 252 in Spalte 5, Zeile 3, bis Spalte 7, Zeile 42, angegeben.

Als Komponente (C) werden Polyole, Polycarbonsäuren, Polyamine oder Polysulfide bzw. Gemische aus Verbindungen dieser Stoffklassen eingesetzt.

Die in Betracht kommenden Polyole schließen Diole, Triole und höhere polymere Polyole, wie Polyesterpolyole, Polyetherpolyole, ein.

Für die Komponente (C) geeignete Polyalkylenetherpolyole entsprechen der allgemeinen Formel 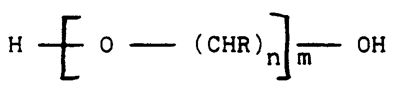
in der R = Wasserstoff oder ein niedriger Alkylrest, ggf. mit verschiedenen Substituenten, ist, n = 2 bis 6 und m = 3 bis 50 oder noch höher ist. Beispiele sind Poly(oxytetramethylen)glykole und Poly(oxyethylen)glykole.

Wenn Polyetherpolyole, die durch Umsetzung eines cyclischen Polyols, wie z.B. Bisphenol A, mit Ethylenoxid oder einer Mischung aus Ethylenoxid mit einem Alkylenoxid, das 3 bis 8 C-Atome enthält, erhältlich sind, als Komponente (C) eingesetzt werden, dann werden besonders bevorzugte kationische, aminmodifizierte Epoxidharze erhalten (vgl. EP-A-74634).

Polyesterpolyole können ebenfalls als polymere Polyolkomponente verwendet werden. Man kann die Polyesterpolyole durch Polyveresterung von organischen Polycarbonsäuren oder ihren Anhydriden mit organischen Polyolen, die primäre Hydroxylgruppen enthalten, herstellen. Üblicherweise sind die Polycarbonsäuren und die Polyole aliphatische oder aromatische Dicarbonsäuren und Diole.

Die zur Herstellung der Polyester verwendeten Diole schließen Alkylenglykole wie Ethylenglykol, Butylenglykol, Neopentylglykol und andere Glykole, wie Cyclohexandimethanol, ein.

Die Säurekomponente des Polyesters besteht in erster Linie aus niedermolekularen Carbonsäuren oder ihren Anhydriden mit 2 bis 18 Kohlenstoffatomen im Molekül. Geeignete Säuren sind beispielsweise Phthalsäure, Isophthalsäure, Terephthalsäure, Tetrahydrophthalsäure, Hexahydrophthalsäure, Adipinsäure, Azelainsäure, Sebazinsäure, Maleinsäure und Glutarsäure. Anstelle dieser Säuren können auch ihre Anhydride, soweit diese existieren, verwendet werden.

Ferner lassen sich auch Polyesterpolyole, die sich von Lactonen ableiten, als Komponente (C) benutzen. Diese Produkte erhält man durch die Umsetzung eines ε-Caprolactons mit einem Polyol. Solche Produkte sind in der US-PS 3 169 945 beschrieben.

Die Polylactonpolyole, die man durch diese Umsetzung erhält, zeichnen sich durch die Gegenwart einer endständigen Hydroxylgruppe und durch wiederkehrende Polyesteranteile, die sich von dem Lacton ableiten, aus. Diese wiederkehrenden Molekülanteile können der Formel 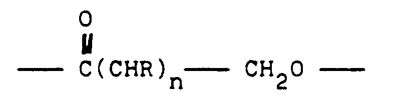
entsprechen, in der n mindestens 4, bevorzugt 4 bis 6, ist und der Substituent Wasserstoff, ein Alkylrest, ein Cycloalkylrest oder ein Alkoxylrest ist.

Als Komponente (C) werden auch aliphatische und/oder alicyclische polyfunktionelle Alkohole oder Carbonsäuren mit einem Molekulargewicht unter 350 eingesetzt. Vorteilhaft weisen diese eine verzweigte aliphatische Kette, insbesondere mit mindestens einer Neostruktur, auf.

Geeignete Verbindungen entsprechen der folgenden allgemeinen Formel: 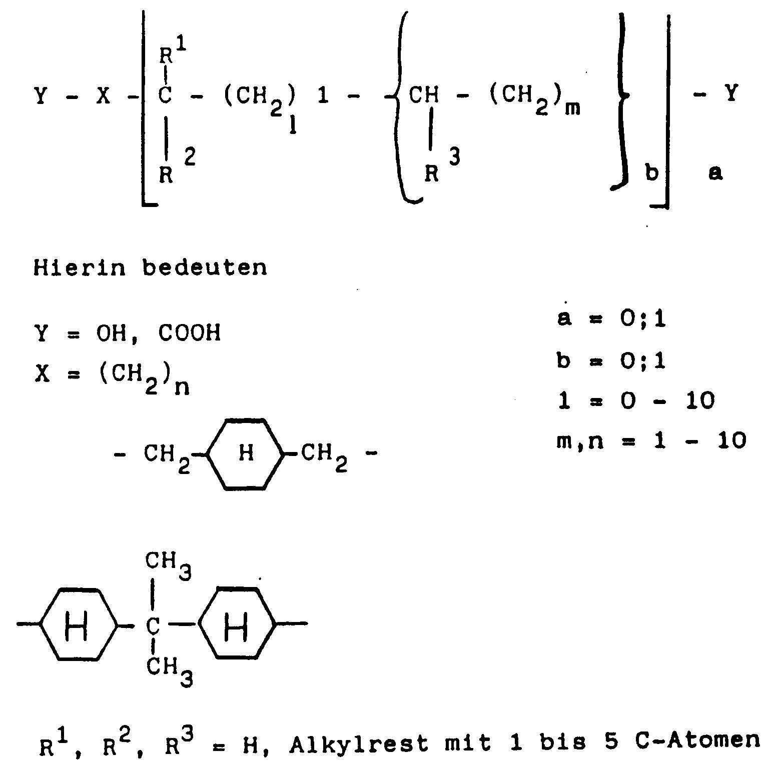
Als Beispiele seien genannt: Diole, wie Ethylenglykol, Diglykol, Dipropylenglykol, Dibutylenglykol, Triglykol, 1,2-Propandiol, 1,3-Propandiol, 2,2-Dimethyl-1,3-propandiol, 2,2-Diethyl-l,3-propandiol, 2-Methyl-2-ethyl-1,3-propandiol, 2-Methyl-2-propyl-1,3-propandiol, 2-Ethyl-2-butyl-1,3-propandiol,1,2-Butandiol, 1,4-Butandiol, 2,3-Butandiol, 2-Ethyl1,4-butandiol, 2,2-Diethyl-1,3-butandiol, Buten-2-diol-1,4, 1,2-Pentandiol, 1,5-Pentandiol, 3-Methyl-1,5-pentandiol, 1,6-Hexandiol, 2,5-Hexandiol, 2-Ethyl-1,3-hexandiol, 2,5-Dimethyl-2,5-hexandiol, 1,3-Octandiol, 4,5-Nonandiol, 2,10-Decandiol, 2-Hydroxyethylhydroxyacetat, 2,2-Dimethyl-3-hydroxypropyl-2,2-dimethylhydroxypropionat, 2-Methyl-2-propyl-3-hydroxypropyl-2-methyl-2-propylhydroxypropionat, 4,4'-Methylenbiscyclohexanol und 4,4'-Isopropylidenbiscyclohexanol. Einige bevorzugte Diole sind 2,2-Dimethyl-1,3propandiol, 3-Methyl-1,5-pentandiol, 2,2-Dimethyl-3-hydroxypropyl-2,2-dimethylhydroxypropionat und 4,4'-Isopropylidenbiscyclohexanol.

Als Carbonsäuren kommen eine Vielzahl von Dicarbonsäuren in Betracht, wie Oxalsäure, Malonsäure, 2,2-Dimethylmalonsäure, Bernsteinsäure, Glutarsäure, Adipinsäure, Hexahydrophthalsäure, Maleinsäure, Fumarsäure, Pimelinsäure, Korksäure, Azelainsäure, Sebazinsäure, Itaconsäure, Citraconsäure und Mesaconsäure.

Bevorzugt eingesetzte Dicarbonsäuren sind z.B. 2,2-Dimethylmalonsäure und Hexahydrophthalsäure.

Es können auch langkettige Dicarbonsäuren als Komponente (C) eingesetzt werden. Beispiele hierfür sind Dimerfettsäuren, wie etwa die dimere Linolsäure.

Als Komponente (C) geeignete Polyamine kann man z.B. durch Umsetzung von primären Diaminen und Monoepoxiden darstellen. Die gebildeten sekundären substituierten Diamine modifizieren die Epoxidharze in geeigneter Weise.

Als Komponente (C) können auch primär-tertiäre Diamine oder Alkanolamine wie Aminoethanol oder Aminopropanol verwendet werden.

Als polyfunktionelle SH-Verbindungen kommen Umsetzungsprodukte von organischen Dihalogeniden mit Natriumpolysulfid in Betracht. Weitere SH-Verbindungen sind z.B. Umsetzungsprodukte von hydroxylgruppenhaltigen linearen Polyestern, Polyethern oder Polyurethanen mit Mercaptocarbonsäuren wie Mercaptoessigsäure, 2-Mercaptopropionsäure, 3-Mercaptopropionsäure, Mercaptobuttersäure und ähnliche.

Ganz besonders bevorzugte Elektrotauchlackbäder werden erhalten, wenn als kationische, aminmodifizierte Epoxidharze Umsetzungsprodukte aus (A) Polyepoxiden, (B) primären und/oder sekundären Aminen bzw. deren Salze und/oder Salzen von tertiären Aminen und (C)-Polyolen, insbesondere Polyester- und/oder Polyetherpolyolen, eingesetzt werden.

Die kationischen aminmodifizierten Epoxidharze können sowohl als fremdvernetzende Kunstharze als auch als selbstvernetzende Kunstharze eingesetzt werden. Selbstvernetzende kationische aminmodifizierte Epoxidharze können beispielsweise durch chemische Modifikation der kationischen aminmodifizierten Epoxidharze erhalten werden. Ein selbstvernetzendes System kann z.B. dadurch erhalten werden, daß das kationische aminmodifizierte Epoxidharz mit einem teilblockierten Polyisocyanat, das im Durchschnitt eine freie Isocyanatgruppe pro Molekül besitzt und dessen blokkierte Isocyanatgruppen erst bei erhöhten Temperaturen entblockt werden, umgesetzt wird.

Bevorzugte Elektrotauchlackbäder werden erhalten, wenn als kathodisch abscheidbare Kunstharze fremdvernetzende kationische aminmodifizierte Epoxidharze in Kombination mit einem geeigneten Vernetzungsmittel eingesetzt werden.

Beispiele für geeignete Vernetzungsmittel sind Phenoplaste, polyfunktionelle Mannichbasen, Melaminharze, Benzoguanaminharze, blockierte Polyisocyanate und Verbindungen, die mindestens zwei Gruppierungen der allgemeinen Formel R¹-O-CO- enthalten.

Der Rest R¹ bedeutet:
- R¹: = R²-O-CO-CH₂-, R³-CHOH-CH₂-, R⁴-CHOR⁵-CHOH-CH₂-
- R²: = Alkyl
- R³: = H, Alkyl, R⁶-O-CH₂- oder R⁶-CO-O-CH₂-
- R⁴: = H oder Alkyl
- R⁵: = H, Alkyl oder Aryl
- R⁶: = Alkyl, Cycloalkyl oder Aryl
Bevorzugte Elektrotauchlackbäder werden erhalten, wenn als Vernetzungsmittel blockierte Polyisocyanate und/oder Verbindungen, die mindestens zwei Gruppierungen der allgemeinen Formel R¹-O-CO- enthalten, eingesetzt werden.

Als blockierte Polyisocyanate können beliebige Polyisocyanate benutzt werden, bei denen die Isocyanatgruppen mit einer Verbindung umgesetzt worden sind, so daß das gebildete blockierte Polyisocyanat gegenüber Hydroxyl- und Aminogruppen bei Raumtemperatur beständig ist, bei erhöhten Temperaturen, in der Regel im Bereich von etwa 90°C bis etwa 300°C, aber reagiert. Bei der Herstellung der blockierten Polyisocyanate können beliebige für die Vernetzung geeignete organische Polyisocyanate verwendet werden. Bevorzugt sind die Isocyanate, die etwa 3 bis 36, insbesondere etwa 8 bis etwa 15 Kohlenstoffatome enthalten. Beispiele geeigneter Diisocyanate sind Hexamethylendiisocyanat, 2,4-Toluylendiisocyanat, 2,6-Toluylendiisocyanat und 1-Isocyanatomethyl-5-isocyanato-1,3,3-trimethylcyclohexan. Es können auch Polyisocyanate von höherer Isocyanatfunktionalität verwendet werden. Beispiele dafür sind trimerisiertes Hexamethylendiisocyanat und trimerisiertes Isophorondiisocyanat. Ferner kann man auch Mischungen von Polyisocyanaten benutzen. Die bei der Erfindung als Vernetzungsmittel in Betracht kommenden organischen Polyisocyanate können auch Präpolymere sein, die sich beispielsweise von einem Polyol einschließlich eines Polyetherpolyols oder eines Polyesterpolyols ableiten.

Für die Blockierung der Polyisocyanate können beliebige geeignete aliphatische, cycloaliphatische oder aromatische Alkylmonoalkohole verwendet werden. Beispiele dafür sind aliphatische Alkohole, wie Methyl-, Ethyl-, Chlorethyl-, Propyl-, Butyl-, Amyl-, Hexyl-, Heptyl-, Octyl-, Nonyl-, 3,3,5-Trimethylhexyl-, Decyl- und Laurylalkohol; cycloaliphatische Alkohole wie Cyclopentanol und Cyclohexanol; aromatische Alkylalkohole, wie Phenylcarbinol und Methylphenylcarbinol.

Andere geeignete Blockierungsmittel sind Hydroxylamine wie Ethanolamin, Oxime wie Methylethylketonoxim, Acetonoxim und Cyclohexanonoxim oder Amine wie Dibutylamin und Diisopropylamin. Die genannten Polyisocyanate und Blockierungsmittel können bei geeigneten Mengenverhältnissen auch zur Herstellung der oben erwähnten teilblockierten Polyisocyanate verwendet werden.

Beispiele für Verbindungen die mindestens zwei Gruppierungen der allgemeinen Formel R¹-O-CO- enthalten, sind Bis-(carbalkoxymethyl)azelat, Bis-(carbalkoxymethyl)sebacat, Bis-(carbalkoxymethyl)adipat, Bis-(carbalkoxymethyl)decanat, Bis-(carbalkoxymethyl)terephthalat, Bis-(2-hydroxybutyl)-acelat und Bis-(2-hydroxyethyl)terephthalat.

Das Vernetzungsmittel wird in der Regel in einer Menge von 5 bis 60 Gew.-%, bevorzugt 20 bis 40 Gew.-%, bezogen auf das kationische aminmodifizierte Epoxidharz, eingesetzt.

Es ist erfindungswesentlich, daß die in Rede stehenden Elektrotauchlackbäder ein Homo- oder Copolymer eines Alkylvinylethers der allgemeinen Formel CH₂ = CH-O-R enthalten, wobei R für einen Alkylrest mit 2 bis 4 C-Atomen steht.

Derartige Homo- bzw. Copolymere werden durch Polymerisation eines Alkylvinylethers gegebenenfalls zusammen mit weiteren copolymerisierbaren Monomeren hergestellt. Die Polymerisation erfolgt nach gut bekannten Methoden, vorzugsweise kationisch.

Bevorzugt sind die Homo- bzw. Copolymere, die erhältlich sind durch Polymerisation von
- 80 bis 100 Gew.-% eines Alkylvinylethers der allgemeinen Formel CH₂ = CH-O-R, wobei R für einen Alkylrest mit 2 bis 4 C-Atomen, bevorzugt für einen Ethylrest, steht, gegebenenfalls zusammen mit
- bis zu 20 Gew.-% eines copolymerisierbaren Monomeren bzw. eines copolymerisierbaren Monomerengemisches.

Das mittlere Molekulargewicht (Gewichtsmittel) der erhaltenen Polymere sollte im Bereich von 5·10² bis 1·10⁵ g/Mol, vorzugsweise im Bereich von 1·10³ bis 5·10⁴ g/Mol, liegen.

Das oben genannte mittlere Molekulargewicht kann z. B. gelpermeationschromatographisch z. B. unter folgenden Bedingungen ermittelt werden:
Säulentyp: Zwei Säulen mit einem vernetzten Polymer auf Basis von Styrol und Divinylbenzol als Säulenmaterial (PL-Gel 5» mixed Säulen, Hersteller: Polymer Laboratories) mit PL Vorsäule; Abmessungen der beiden erstgenannten Säulen: 300 x 7,5 mm.
Detektortyp: RI (refraction index) Detektor, Knauer Differentialrefraktometer, Stufe 8
Mobile Phase: Tetrahydrofuran
Probenkonzentration: ca. 2%ig in Tetrahydrofuran
Injiziertes Probenvolumen: 50 »l
Probenflußrate: 0,8 ml/min
Eichung: 10 Polystyrolstandards mit bekannter Molmasse von ca. 600 bis 400 000, Erstellung der Eichgeraden mittels linearer Regression.

Bevorzugt eingesetzte Alkylvinylethermonomere sind Ethylund (Iso-)Propylvinylether, besonders bevorzugt wird Ethylvinylether eingesetzt.

Ganz besonders bevorzugt sind Elektrotauchlackbäder, die Homopolymere des Ethylvinylethers enthalten.

Als Beispiele für mit Alkylvinylethern copolymerisierbare Monomere werden Styrol und Alkyl(meth)acrylate wie z.B. Ethyl(meth)acrylat und Methyl(meth)acrylat genannt.

Die erfindungsgemäßen Elektrotauchlackbäder werden nach allgemein gut bekannten Methoden hergestellt. Die Synthese der kathodisch abscheidbaren Kunstharze erfolgt nach gut bekannten Methoden (vgl. z.B. DE-PS-27 01 002 und die weiteren auf Seite 1 zitierten Patentdokumente) in organischen Lösemitteln. Die so erhaltenen Kunstharzlösungen bzw. -dispersionen werden in neutralisierter Form in eine wäßrige Phase überführt.

Pigmente werden vorzugsweise in Form einer Pigmentpaste in die wäßrige Dispersion der kathodisch abscheidbaren Harze eingearbeitet.

Die Herstellung von Pigmentpasten ist allgemein bekannt und braucht hier nicht näher erläutert zu werden (vgl. D.H. Parker, Principles of Surface Coating Technology, Intersience Publishers, New York (1965); R.L. Yates, Electropainting, Robert Draper Ltd., Teddington/England (1966); H.F. Payne, Organic Coating Technology, Band 2, Wiley and Sons, New York (1961)).

Zur Herstellung der Pigmentpasten werden z.B. quarternäre Ammoniumgruppen enthaltende Epoxid-Aminaddukte eingesetzt.

Die Pigmentpasten können im Prinzip alle für Elektrotauchlacke geeigneten Pigmente enthalten. Im allgemeinen ist Titandioxyd das einzige oder das hauptsächliche weiße Pigment. Andere weiße Pigmente oder Streckmittel, wie Antimonoxid, Zinkoxid, basisches Bleicarbonat, basisches Bleisulfat, Bariumcarbonat, Porzellan, Ton, Kalciumcarbonat, Aluminiumsilikat, Siliciumdioxid, Magnesiumcarbonat und Magnesiumsilikat können aber auch verwendet werden. Als farbige Pigmente können beispielsweise Cadmiumgelb, Cadmiumrot, Ruß, Phthalocyaninblau, Chromgelb, Toluidylrot und hydradisiertes Eisenoxid benutzt werden.

Die Pigmentpaste kann neben den Pigmenten auch noch Weichmacher, Füllstoffe, Netzmittel usw. enthalten.

Die Pigmentpaste wird in einer solchen Menge zur wäßrigen Dispersion des kathodisch abscheidbaren Kunstharzes gegeben, daß das fertige Elektrotauchlackbad die für die Abscheidung erforderlichen Eigenschaften aufweist. In den meisten Fällen beträgt das Gewichtsverhältnis zwischen Pigment und kathodisch abscheidbarem Kunstharz 0,05 bis 0,5.

Es gibt mehrere Möglichkeiten, die erfindungsgemäß eingesetzten Alkylvinyletherhomo- oder -copolymere in Elektrotauchlackbäder einzuarbeiten. Die erfindungsgemäß eingesetzten Alkylvinyletherhomo- oder -copolymere werden vorzugsweise in die Pigmentpaste oder in die organische Kunstharzlösung bzw. -dispersion eingearbeitet. Dabei kann es vorteilhaft sein, die in Rede stehenden Polymere in einem geeigneten Lösungsmittel (z.B. Butanol, Ethylacetat, Butylglykol, Methylisobutylketon oder Testbenzin) anzulösen. In manchen Fällen kann es nützlich sein, Emulgatoren mitzuverwenden.

Prinzipiell gesehen können die erfindungsgemäß eingesetzten Alkylvinyletherhomo- oder -copolymere zu jedem Zeitpunkt der Herstellung und auch nach Fertigstellung der Elektrotauchlackbäder in die Elektrotauchlackbäder inkorporiert werden.

Die erfindungsgemäß eingesetzten Alkylvinyletherhomo-oder -copolymere werden in solchen Mengen in die erfindungsgemäßen Elektrotauchlackbäder eingearbeitet, daß die fertigen Elektrotauchlackbäder vorzugsweise 10 bis 10000 ppm, besonders bevorzugt 100 bis 1500 ppm, ganz besonders bevorzugt 150 bis 500 ppm, des Alkylvinyletherhomo- oder -copolymers enthalten (die Angabe ppm - parts per million - ist auf Gewichtsteile bezogen).

Es ist selbstverständlich, daß auch Mischungen unterschiedlicher Alkylvinyletherhomo- oder -copolymere eingesetzt werden können.

Die Oberflächenstörungen verhindernde Wirkung der Alkylvinyletherhomo- oder -copolymere überrascht besonders, weil die in der Vergangenheit zu diesem Zweck eingesetzten Materialien im allgemeinen eine aus ihrer chemischen Struktur herleitbare Oberflächenwirksamkeit aufweisen. Es handelt sich häufig um Tenside, wie z.B. polyethylenoxidmodifizierte Silikone oder um Materialien mit sehr geringen Oberflächenspannungen von ca. 20 bis 25 mN/m. Die erfindungsgemäß eingesetzten Alkylvinyletherhomo- oder -copolymere besitzen jedoch weder die Struktur noch die Wirkungsweise von Tensiden sowie mit ca. 32 mN/m einen für organische Materialien üblichen Wert der Oberflächenspannung.

Die erfindungsgemäßen Elektrotauchlackbäder können neben dem kathodisch abscheidbaren Kunstharz, der Pigmentpaste und dem Alkyvinyletherhomo- oder -copolymer noch weitere übliche Zusatzstoffe enthalten, wie z.B. Zusatzlösungsmittel, Antioxidantien, oberflächenaktive Mittel usw.

Der Festkörper der erfindungsgemäßen Elektrotauchlackbäder beträgt vorzugsweise 7 bis 35 Gew.-Teile, besonders bevorzugt 12 bis 25 Gew.-Teile. Der pH-Wert der Elektrotauchlackbäder liegt zwischen 4 und 8, vorzugsweise zwischen 5 und 7,5.

Die erfindungsgemäßen Elektrotauchlackbäder lassen sich zum Überziehen von beliebigen elektrisch leitenden Substraten, insbesondere aber zum Überziehen von Metallen, wie Stahl, Aluminium, Kupfer u. dgl. verwenden.

Die Erfindung betrifft auch ein Verfahren zum Beschichten elektrisch leitfähiger Substrate, bei dem
(1) das Substrat in ein Wäßriges Elektrotauchlackbad, das mindestens ein kathodisch abscheidbares Kunstharz enthält, eingetaucht wird,
(2) das Substrat als Kathode geschaltet wird,
(3) durch Gleichstrom ein Film auf dem Substrat abgeschieden wird,
(4) das Substrat aus dem Elektrotauchlack entfernt wird und
(5) der abgeschiedene Lackfilm eingebrannt wird.

Das Verfahren ist dadurch gekennzeichnet, daß das wäßrige Elektrotauchlackbad ein Homo- oder Copolymer eines Alkylvinylethers der allgemeinen Formel CH₂ = CH-O-R enthält, wobei R für einen Alkylrest mit 2 bis 4 C-Atomen steht.

Das Elektrotauchlackbad wird mit einer elektrisch leitenden Anode und mit dem als Kathode geschalteten elektrisch leitfähigen Substrat in Berührung gebracht. Beim Durchgang von elektrischem Strom zwischen Anode und Kathode wird ein fest haftender Lackfilm auf der Kathode abgeschieden.

Die Temperatur des Elektrotauchlackbades soll zwischen 15 bis 35°C, bevorzugt zwischen 20 und 30°C liegen.

Die angelegte Spannung kann in einem großen Bereich schwanken und kann z.B. zwischen zwei und tausend Volt liegen. Typischerweise wird aber mit Spannungen zwischen 50 und 500 Volt gearbeitet. Die Stromdichte liegt in der Regel zwischen etwa 10 und 100 Ampere/m². Im Verlauf der Abscheidung neigt die Stromdichte zum Abfallen.

Nach der Abscheidung wird der beschichtete Gegenstand abgespült und ist zum Einbrennen bereit.

Die abgeschiedenen Lackfilme werden im allgemeinen bei Temperaturen von 130 bis 200°C über eine Zeitdauer von 10 bis 60 Minuten, vorzugsweise bei 150 bis 180°C über eine Zeitdauer von 15 bis 30 Minuten, eingebrannt.

Die Erfindung betrifft auch die Verwendung von Homo- oder Copolymeren eines Alkylvinylethers der allgemeinen Formel CH₂ = CH - O - R, wobei R für einen Alkylrest mit 2 bis 4 C-Atomen steht, als Additive für kathodisch abscheidbare Kunstharze enthaltende wäßrige Elektrotauchlackbäder. Durch den Zusatz dieser Alkylvinyletherhomo- bzw. -copolymeren wird die Bildung von Oberflächenstörungen unterdrückt.

Die Erfindung wird in den folgenden Beispielen näher erläutert. Alle Angaben über Teile und Prozentsätze sind Gewichtsangaben, falls nicht ausdrücklich etwas anderes festgestellt wird.

### 1. Herstellung wäßriger Kunstharzdispersionen auf Basis kationischer aminmodifizierter Epoxidharze

### 1.1 Herstellung einer Dispersion gemäß Beispiel B der EP-A-70550

| | Einwaage (g) |
|---|---|
| - Epikote 829¹) | 727,6 |
| - Capa 200²) | 268,4 |
| - Xylol | 36,1 |
| - Bisphenol A | 197,8 |
| - Dimethylbenzylamin | 3,8 |
| - Isocyanatvernetzer³) | 901,3 |
| - Diketimin aus MIBK und Diethylentriamin 75%ig in MIBK | 73,4 |
| - N-Methylethanolamin | 59,1 |
| - Hexylglykol | 76,5 |
| - Essigsäure | 33,5 |
| - Emulgatorgemisch⁴) | 29,4 |
| - Deionisiertes Wasser | 1793,1 |
| MIBK = Methylisobutylketon | |

| | |
|---|---|
| 1) Epoxidharz der Shell Chemie, Epoxidäquivalent 188 | |
| 2) Polyesterdiol der Interox Chemical | |
| 3) Isocyanatvernetzer auf Basis Toluylendiisocyanat mit Butylglykolverkappung und Umsetzung mit Trimethylolpropan im Verhältnis 3:1, angelöst in einer Mischung aus MIBK und n-Butanol (9:1) zu 70 % Festkörper | |
| 4) Emulgatorgemisch auf Basis von Geigy Amin C (Geigy Industrial Chemicals) 120 Teile, Surfynol 104 (Air Products and Chemicals) 120 Teile, Butylglykol 120 Teile und 221 Teile deionisiertes Wasser mit 19 Teilen Eisessig. | |

### Herstellvorschrift

Epikote 829, Capa 200 und Xylol werden in einem Reaktionsgefäß vorgelegt und unter N₂-Schutzgas auf 210°C erhitzt. Während einer halben Stunde wird dann Wasser ausgekreist. Danach kühlt man den Ansatz auf 150°C ab, gibt Bisphenol A und 1,6 Teile Dimethylbenzylamin zu. Man erhitzt dann auf 180°C und hält diese Temperatur eine halbe Stunde. Danach kühlt man auf 130°C und gibt die Restmenge Dimethylbenzylamin zu. Danach hält man die Temperatur für 2 1/2 Stunden, gibt dann den Isocyanatvernetzer, das Diketimin und N-Methylethanolamin zu und hält dann die Temperatur für eine halbe Stunde bei 110°C Danach fügt man das Hexylglykol zu. Die Reaktionsmischung wird dann in dem deionisierten Wasser, das Eisessig und Emulgatorgemisch enthält, dispergiert. Anschließend wird Vakuum angelegt, um die leicht flüchtigen organischen Lösemittel zu entfernen. Es wird ein Festkörper von 36 % eingestellt.

### 1.2 Herstellung einer Dispersion gemäß Beispiel 2 der DE-A-31 08 073

In einem Reaktionsgefäß werden 1093 Teile Araldit GY 2600 (Epoxidäquivalentgewicht EEW = 188, Epoxidharz auf Basis von Bisphenol A der Ciba-Geigy), 151 Teile Neopentylglykol und 4,9 Teile Dimethylbenzylamin vorgelegt. Die Temperatur wird auf 131°C angehoben und gehalten, bis ein EEW von 415 erreicht ist. Danach gibt man 398 Teile Capa 200 (siehe Pkt. 1.1) und weitere 3,8 Teile Dimethylbenzylamin zu. Man hält die Temperatur bei 131°C, bis ein EEW von 1030 erreicht ist. Danach fügt man 1274 Teile des Vernetzers (siehe Pkt. 1.1) und 112 Teile des ebenfalls in Beispiel 4 erwähnten Diketimins sowie 86 Teile N-Methylethanolamin zu und hält die Temperatur für 1 Stunde bei 112°C. Dann mischt man 135 Teile Phenoxypropanol und 40 Teile Methoxypropanol zu und mischt 15 Minuten unter. Diese Harzlösung wird in 3247 Teilen Wasser, 23,5 Teilen Eisessig und 21 Teilen Emulgatorgemisch (siehe Pkt. 1.1) dispergiert.

Anschließend entfernt man im Vakuum die niedrigsiedenden Losemittel und stellt einen Festkörper von 35 % ein.

### 2. Herstellung einer Pigmentpaste

### 2.1 Herstellung eines Reibharzes

Zu 953 Teilen eines handelsüblichen Epoxidharzes auf Basis Bisphenol A mit einem Epoxidäquivalentgewicht von 890 werden 800 Teile Butylglykol gegeben. Die Mischung wird auf 80°C erhitzt. In die Harzlösung werden dann 221 Teile eines Umsetzungsproduktes aus 101 Teilen Diethanolamin und 120 Teilen 80%iger, wäßriger Milchsäure gegeben. Man führt die Reaktion bei 80°C durch, bis die Säurezahl unter 1 gefallen ist.

### 2.2 Herstellung der Pigmentpaste

1800 Teile des Reibharzes werden mit 2447 Teilen entionisiertem Wasser vorgelegt und mit 175 g einer 50%igen Lösung eines Ethylvinyletherhomopolymeren (mittleres Molekulargewicht (Gewichtsmittel) zwischen 10³ und 10⁴) in Methylisobutylketon intensiv vermischt. Anschließend wird mit 2460 Teilen TiO₂. 590 Teilen eines Extenders auf Basis Aluminiumsilikat, 135 Teilen Bleisilikat, 37 Teilen Ruß und 25 Teilen Bleioctoat vermengt. Diese Mischung wird in einem Mahlaggregat auf eine Hegman-Feinheit von 5 bis 7 zerkleinert. Danach gibt man 1255 Teile entionisiertes Wasser zu, um die gewünschte Pastenkonsistenz zu erreichen.

### 3. Zubereitung erfindungsgemäßer Elektrotauchlackbäder und Abscheidungen

500 Gewichtsteile der Dispersionen gemäß Pkt. 1.1 bzw. 1.2 werden mit 196 Teilen der Pigmentpaste gemäß Pkt. 2 versetzt und mit entionisiertem Wasser auf einen Badfestkörper von 20 Gew.-% eingestellt. Die Abscheidung der Lackfilme erfolgt während 2 Minuten bei 300 V auf zinkphosphatiertem Blech. Die Badtemperatur beträgt 27°C Die Filme werden bei 180°C 20 Minuten eingebrannt.
- Elektrotauchlackbad 1:: Dispersion gemäß Pkt. 1.1 mit Paste gemaß Pkt. 2.2
- Elektrotauchlackbad 2:: Dispersion gemäß Pkt. 1.1, mit Paste analog Pkt. 2.2, aber ohne Ethylvinyletherhomopolymer
- Elektrotauchlackbad 3:: Dispersion gemäß Pkt. 1.2 mit Paste gemäß Pkt. 2.2
- Elektrotauchlackbad 4:: Dispersion gemäß Pkt. 1.2 mit Paste analog Pkt. 2.2, aber ohne Ethylvinyletherhomopolymer

### Abscheideergebnisse

| Elektrotauchlackbad | 1 | 2 | 3 | 4 |
|---|---|---|---|---|
| Schichtdicke (»m) | 19 | 19 | 32 | 32 |
| Verlauf¹⁾ | 1,0 | 1,5 | 1,0 | 1,5 |
| Krater/dm² | 0,0 | 0,5 | 0,0 | 2,0 |

| | | | | |
|---|---|---|---|---|
| 1) Verlauf: 0 bis 5 (gut - schlecht) | | | | |

Diese Filme wurden nun mit einem handelsüblichen Wasserfüller und einem weißen Alkyddecklack überlackiert und 240 Stunden im Schwitzwasser-Konstant-Klima getestet. Danach wurde die Haftung der Filme mittels Gitterschnitt und Tesaabriß geprüft.

| Elektrotauchlackbad | 1 | 2 | 3 | 4 |
|---|---|---|---|---|
| Haftung²⁾ | 0,5 | 0,5 | 0,5 | 0,5 |

| | | | | |
|---|---|---|---|---|
| 2) Note 0 bis 5 (gut - schlecht) | | | | |

Die KTL-Bäder wurden anschließend mit 0,1 % ASTM-Öl kontaminiert. Das Öl wurde innerhalb eines Tages eingerührt. Danach erfolgten Abscheidungen aus den Bädern wie oben beschrieben.

| Elektrotauchlackbad | 1 | 2 | 3 | 4 |
|---|---|---|---|---|
| Krater/dm² | 0 | >50 | 0 | >50 |

### 4. Herstellung wäßriger Kunstharzdispersionen, die ein Homo- oder Copolymer eines Alkylvinylethers enthalten

4.1 Wie Pkt. 1.1 mit dem Unterschied, daß nach der Zugabe von 76,5 g Hexylglykol noch zusätzlich 11,2 g eines Ethylvinyletherhomopolymeren (mittleres Molekulargewicht (Gewichtsmittel) zwischen 10³ und 10⁴) zugegeben werden.
4.2 Wie Pkt. 1.2 mit dem Unterschied, daß nach der Zugabe von 40 Teilen Methoxypropanol noch zusätzlich 15,6 Teile eines Ethylvinyletherhomopolymeren (mittleres Molekulargewicht (Gewichtsmittel) zwischen 10³ und 10⁴) zugegeben werden.

### 5. Herstellung einer Pigmentpaste

Wie unter Pkt. 2.1 und Pkt. 2.2 beschrieben, aber ohne Zusatz des Ethylvinyletherhomopolymeren.

### 6. Zubereitung erfindungsgemäßer Elektrotauchlackbäder und Abscheidungen

500 Gewichtsteile der Dispersionen gemäß Pkt. 4.1 bzw. 4.2 werden mit 196 Teilen der Pigmentpaste gemäß Pkt. 5 versetzt und mit entionisiertem Wasser auf einen Badfestkörper von 20 Gew.-% eingestellt. Die Abscheidung der Lackfilme erfolgt während 2 Minuten bei 300 V auf zinkphosphatiertem Blech. Die Badtemperatur beträgt 27°C. Die Filme werden bei 180°C 20 Minuten eingebrannt.
- Elektrotauchlackbad 5:: Dispersion gemäß Pkt. 1.1 mit Paste gemäß Pkt. 5
- Elektrotauchlackbad 6:: Dispersion gemäß Pkt. 4.1 mit Paste gemäß Pkt. 5
- Elektrotauchlackbad 7:: Dispersion gemäß Pkt. 1.2 mit Paste gemäß Pkt. 5
- Elektrotauchlackbad 8:: Dispersion gemäß Pkt. 4.2 mit Paste gemäß Pkt. 5

### Abscheideergebnisse

| Elektrotauchlackbad | 5 | 6 | 7 | 8 |
|---|---|---|---|---|
| Schichtdicke (»m) | 19 | 20 | 34 | 34 |
| Verlauf¹⁾ | 1,0 | 1,0 | 0,5 | 0,5 |
| Krater/dm² | 0,5 | 0 | 3 | 0 |

| | | | | |
|---|---|---|---|---|
| 1) Verlauf: 0 bis 5 (gut - schlecht) | | | | |

Diese Filme wurden nun mit einem handelsüblichen Wasserfüller und einem weißen Alkyddecklack überlackiert und 240 Stunden im Schwitzwasser-Konstant-Klima getestet. Danach wurde die Haftung der Filme mittels Gitterschnitt und Tesaabriß geprüft.

| Elektrotauchlackbad | 5 | 6 | 7 | 8 |
|---|---|---|---|---|
| Haftung²⁾ | 0,5 | 0,5 | 0 | 0 |

| | | | | |
|---|---|---|---|---|
| 2) Note 0 bis 5 (gut - schlecht) | | | | |

Die KTL-Bäder wurden anschließend mit 0,1 % ASTM-Öl kontaminiert. Das Öl wurde innerhalb eines Tages eingerührt. Danach erfolgten Abscheidungen aus den Bädern wie oben beschrieben.

| Elektrotauchlackbad | 5 | 6 | 7 | 8 |
|---|---|---|---|---|
| Krater/dm² | >50 | 0,5 | >50 | 0 |

### 7. Herstellung einer wäßrigen Kunstharzdispersion auf Basis eines kationischen aminmodifizierten Epoxidharzes

### 7.1 Herstellung eines aminmodifizierten Epoxidharzes

In einem Reaktionsgefäß werden 1780 g Epikote 1001 1) , 280 g Dodecylphenol und 105 g Xylol vorgelegt und unter Stickstoffatmosphäre bei 120°C aufgeschmolzen. Anschließend werden unter leichtem Vakuum Wasserspuren durch Auskreisen entfernt. Dann gibt man 3 g N,N-Dimethylbenzylamin zu, erwärmt die Reaktionsmischung auf 180°C und hält diese Temperatur für ca. 3 h, bis das Epoxidäquivalentgewicht (EEW) auf 1162 angestiegen ist. Sodann kühlt man und gibt in rascher Abfolge 131 g Hexylglykol, 131 g Diethanolamin und 241 g Xylol zu. Dabei steigt die Temperatur leicht an. Danach läßt man das Reaktionsgemisch auf 90°C abkühlen und gibt zur weiteren Verdünnung 183 g Butylglykol und 293 g Isobutanol zu. Wenn die Temperatur auf 70°C gefallen ist, gibt man 41 g N,N-Dimethylaminopropylamin zu, hält diese Temperatur für 3 h und trägt aus.

Das Harz hat einen Festgehalt von 70,2 % und einen Basengehalt von 0,97 Milliäquivalenten/Gramm.

### 7.2 Herstellung eines Vernetzungsmittels

In einem Reaktionsgefäß werden unter Stickstoffatmosphäre 488 g über Isocyanuratbildung trimerisiertes 80 Hexamethylendiisocyanat 2) und 170 g Methylisobutylketon vorgelegt und auf 50°C erwärmt. Sodann läßt man 312 g Di-n-butylamin so zutropfen, daß die Innentemperatur bei 60 bis 70°C gehalten wird. Nach Ende der Zugabe wird noch 1 h bei 75°C gerührt und anschließend mit 30 g n-Butanol verdünnt und abgekühlt. Der Vernetzer hat einen Festgehalt von 79,6 % (1 h bei 130°C) und eine Aminzahl von kleiner 5 mg KOH/g.

### 7.3 Herstellung einer wäßrigen Kunstharzdispersion

1) Epoxidharz der Fa. Shell mit einem Epoxidäquivalentgewicht von 500
2) Handelsprodukt der BASF AG mit einem Isocyanatäquivalentgewicht von 193

1120 g Harz gemäß Pkt. 7.1 und 420 g Vernetzer gemäß Pkt. 7.2 werden bei Raumtemperatur gerührt. Nachdem die Mischung homogen ist (15 min), werden 2,2 g einer Entschäumerlösung¹ ) und 18 g Eisessig eingerührt und 678 g entionisiertes Wasser über 4 Portionen verteilt zugegeben. Anschließend wird mit weiteren 1154 g entionisiertem Wasser in kleinen Portionen verdünnt.
1) Surfynol (Handelsprodukt der Air Chemicals), 50%ige Lösung in Ethylenglykolmonobutylether

Die resultierende wäßrige Dispersion wird in einer Vakuumdestillation von niedrigsiedenden Lösemitteln befreit und anschließend mit entionisiertem Wasser auf einen Festkörper von 33 % verdünnt.

### 8. Herstellung einer Pigmentpaste

### 8.1 Herstellung eines Reibharzes gemäß DE-OS-34 22 457

640 Teile eines Diglycidylethers auf Basis von Bisphenol A und Epichlorhydrin mit einem Epoxid-Äquivalentgewicht von 485 und 160 Teile eines solchen mit einem Epoxid-Äquivalentgewicht von 189 werden bei 100°C gemischt. In einem weiteren Gefäß werden 452 Teile Hexamethylendiamin vorgelegt, auf 100°C erhitzt und 720 Teile der obigen heißen Epoxidharzmischung innerhalb einer Stunde zugegeben, wobei leicht gekühlt werden muß, um die Temperatur bei 100°C zu halten. Nach weiteren 30 min wird unter Temperaturerhöhung und vermindertem Druck das überschüssige Hexamethylendiamin abgezogen, wobei zum Schluß eine Tempertur von 205°C und ein Druck von 30 mbar erreicht wird. Anschließend werden 57,6 Teile Stearinsäure, 172,7 Teile Dimerfettsäure und 115 Teile Xylol zugesetzt. Dann wird innerhalb von 90 min bei 175 bis 180°C das gebildete Wasser azeotrop abdestilliert Anschließend werden 58 Teile Butylglykol und 322 Teile Isobutanol zugefügt. Das Produkt hat einen Feststoffgehalt von 70 % und eine Viskosität, gemessen bei 75°C mit einem Platten-Kegel Viskosimeter, von 2240 mPas.

### 8.2 Herstellung der Pigmentpaste

586 Teile des Reibharzes werden mit 1162 Teilen entionisiertem Wasser und 22 Teilen Eisessig vorgelegt und mit 37 Teilen einer 50%igen Lösung eines Ethylvinyletherhomopolymeren (mittleres Molekulargewicht (Gewichtsmittel) zwischen 10³ und 10⁴) in Butylglykol intensiv vermischt. Anschließend wird mit 880 Teilen TiO₂, 250 Teilen eines Extenders auf Basis Aluminiumsilikat, 53 Teilen Bleisilikat und 10 Teilen Ruß vermengt. Diese Mischung wird in einem Mahlaggregat auf eine Hegman-Feinheit von kleiner 12 »m zerkleinert. Danach gibt man entionisiertes Wasser zu, um die gewünschte Pastenkonsistenz zu erreichen.

### 9. Zubereitung erfindungsgemäßer Elektrotauchlackbäder und Abscheidungen

2200 Gewichtsteile der Dispersion gemäß pkt. 7.3 werden mit 700 Teilen der Pigmentpaste gemäß Pkt. 8.2 versetzt und mit entionisiertem Wasser auf einen Badfestkörper von 20 Gew.-% eingestellt. Die Abscheidung der Lackfilme erfolgt während 2 min bei 350 V auf zinkphosphatiertem Blech. Die Badtemperatur beträgt 27°C. Die Filme werden bei 160°C 20 min eingebrannt.
- Elektrotauchlackbad 1:: Dispersion gemäß Pkt. 7.3 mit Paste gemäß Pkt. 8.2
- Elektrotauchlackbad 2:: Dispersion gemäß Pkt. 7.3 mit Paste analog Pkt. 8.2 aber ohne Ethylvinyletherhomopolymer

### Abscheideergebnisse:

| Elektrotauchlackbad | 1 | 2 |
|---|---|---|
| Schichtdicke (»m) | 20 | 20 |
| Verlauf¹⁾ | 1,5 | 1,5 |
| Krater/dm² | 0 | 0,5 |

| | | |
|---|---|---|
| 1) Verlauf: Note 0 bis 5 (gut - schlecht) | | |

Diese Filme wurden nun mit einem handelsüblichen Wasserfüller und einem weißen Alkyddecklack überlackiert und 240 h im Schwitzwasser-Konstant-Klima getestet. Danach wurde die Haftung der Filme mittels Gitterschnitt und Tesaabriß geprüft.

| Elektrotauchlackbad | 1 | 2 |
|---|---|---|
| Haftung¹⁾ | 0,5 | 0,5 |

| | | |
|---|---|---|
| 1) Verlauf: Note 0 bis 5 (gut - schlecht) | | |

Die KTL-Bäder wurden anschließend mit 0,1 % ASTM-Öl kontaminiert. Das Öl wurde innerhalb eines Tages eingerührt. Danach erfolgten Abscheidungen aus den Bädern wie oben beschrieben.

| Elektrotauchlackbad | 1 | 2 |
|---|---|---|
| Krater/dm² | 0 | 50 |

## Patentansprüche

1. Kathodisch abscheidbare Kunstharze und im eingebrannten Elektrotauchlackfilm Oberflächenstörungen verursachende Verunreinigungen enthaltende wäßrige Elektrotauchlackbäder, dadurch gekennzeichnet, daß sie ein Homo- oder Copolymer eines Alkylvinylethers der allgemeinen Formel CH₂ = CH - O - R enthalten, wobei R für eine Alkylrest mit 2 bis 4 C-Atomen steht.

2. Elektrotauchlackbäder nach Anspruch 1, dadurch gekennzeichnet, daß sie als kathodisch abscheidbares Kunstharz ein kationisches, aminmodifiziertes Epoxidharz enthalten.

3. Verfahren zur Beschichtung elektrisch leitfähiger Substrate, bei dem
(1) das Substrat in ein wäßriges Elektrotauchlackbad, das mindestens ein kathodisch abscheidbares Kunstharz und im eingebrannten Elektrotauchlackfilm Oberflächenstörungen verursachende Verunreinigungen enthält, eingetaucht wird,
(2) das Substrat als Kathode geschaltet wird,
(3) durch Gleichstrom ein Film auf dem Substrat abgeschieden wird,
(4) das Substrat aus dem Elektrotauchlackbad entfernt wird und
(5) der abgeschiedene Lackfilm eingebrannt wird,
dadurch gekennzeichnet, daß das Elektrotauchlackbad ein Homo- oder Copolymer eines Alkylvinylethers der allgemeinen Formel CH₂ = CH - O - R enthält, wobei R für einen Alkylrest mit 2 bis 4 C-Atomen steht.

4. Verfahren nach Anspruch 3, dadurch gekennzeichnet, daß das Elektrotauchlackbad als kathodisch abscheidbares Kunstharz ein kationisches, aminmodifiziertes Epoxidharz enthält.

5. Substrat, beschichtet nach dem Verfahren gemäß eines der Ansprüche 3 oder 4.

6. Verwendung von Homo- oder Copolymeren eines Alkylvinylethers der allgemeinen Formel CH₂ = CH - O - R, wobei R für einen Alkylrest mit 2 bis 4 C-Atomen steht, als Additiv für kathodisch abscheidbare Kunstharze und im eingebrannten Elektrotauchlackfilm Oberflächenstörungen verursachende Verunreinigungen enthaltende wäßrige Elektrotauchlackbäder.

## Claims

1. An aqueous electrocoating bath containing synthetic resins capable of deposition on the cathode and impurities causing surface defects in the stoved electrocoating film, which contains a homopolymer or copolymer of an alkyl vinyl ether of the general formula CH₂=CH-O-R wherein R represents an alkyl radical having 2 to 4 C atoms.

2. An electrocoating bath as claimed in claim 1, which contains, as the synthetic resin capable of deposition on the cathode, a cationic, amine-modified epoxy resin.

3. A process for coating electrically conducting substrates, in which
(1) the substrate is immersed in an aqueous electrocoating bath containing at least one synthetic resin capable of deposition on the cathode and impurities causing surface defects in the stoved electrocoating film,
(2) the substrate is connected as the cathode,
(3) a film is deposited on the substrate by means of direct current,
(4) the substrate is removed from the electrocoating bath and
(5) the paint film deposited is stoved,
wherein the electrocoating bath contains a homopolymer or copolymer of an alkyl vinyl ether of the general formula CH₂=CH-O-R wherein R represents an alkyl radical having 2 to 4 C atoms.

4. A process as claimed in claim 3, wherein the electrocoating bath contains, as the synthetic resin capable of deposition on the cathode, a cationic, amine-modified epoxy resin.

5. A substrate coated by the process as claimed in one of claims 3 or 4.

6. The use of homopolymers or copolymers of an alkyl vinyl ether of the general formula CH₂=CH-O-R wherein R represents an alkyl radical having 2 to 4 C atoms as an additive for aqueous electrocoating baths containing synthetic resins capable of deposition on the cathode and impurities causing surface defects in the stoved electrocoating film.

## Revendications

1. Bains aqueux de vernissage par trempage électrophorétique, contenant des résines susceptibles d'être déposées à la cathode et des impuretés provoquant des perturbations superficielles dans le film de vernissage par trempage électrophorétique après cuisson, caractérisés en ce qu'ils contiennent un homopolymère ou un copolymère d'un éther alkylvinylique de formule générale CH₂ = CH-O-R, R représentant un résidu alkyle ayant de 2 à 4 atomes de C.

2. Bains de vernissage par trempage électrophorétique selon la revendication 1, caractérisés en ce qu'ils contiennent, en tant que résine susceptible d'être déposée à la cathode, une résine époxyde cationique modifiée aux amines.

3. Procédé de revêtement de substrats électroconducteurs, lors duquel
(1) le substrat est immergé dans un bain aqueux de vernissage par trempage électrophorétique, qui contient au moins une résine susceptible d'être déposée à la cathode et des impuretés provoquant des perturbations superficielles dans le film de vernissage par trempage électrophorétique après cuisson,
(2) le substrat est branché en tant que cathode,
(3) un film est déposé sur le substrat par un courant continu,
(4) le substrat est retiré du bain de vernissage par trempage électrophorétique et
(5) le film déposé est soumis à cuisson, caractérisé en ce que le bain de vernissage par trempage électrophorétique contient un homopolymère ou un copolymère d'un éther alkylvinylique de formule générale CH₂ = CH-O-R, R représentant un résidu alkyle ayant de 2 à 4 atomes de C.

4. Procédé selon la revendication 3, caractérisé en ce que le bain de vernissage par trempage électrophorétique contient, en tant que résine susceptible d'être déposée à la cathode, une résine époxyde cationique modifiée aux amines.

5. Substrat, revêtu selon le procédé conformément à l'une des revendications 3 ou 4.

6. Utilisation d'homopolymères ou de copolymères d'un éther alkylvinylique de formule générale CH₂ = CH-O-R, R représentant un résidu alkyle ayant de 2 à 4 atomes de C, en tant qu'additif pour des bains aqueux de vernissage par trempage électrophorétique, contenant des résines susceptibles d'être déposées à la cathode, et des impuretés provoquant des perturbations superficielles dans le film de vernissage par trempage électrophorétique après cuisson.
